(19) Europäisches Patentamt
European Patent Office
Office européen des brevets

(11) **EP 2 545 827 B1**

(12) **EUROPEAN PATENT SPECIFICATION**

(45) Date of publication and mention
of the grant of the patent:
**30.04.2014 Bulletin 2014/18**

(51) Int Cl.:
*A47J 31/46* *(2006.01)* *A47J 31/56* *(2006.01)*

(21) Application number: **12176257.9**

(22) Date of filing: **13.07.2012**

(54) **A coffee machine provided with a discharge steam reducing device and a method for reducing the discharge steam in a coffee machine**

Kaffeemaschine mit einer Vorrichtung zur Verringerung von Restdampf und Verfahren zur Verringerung von Restdampf in einer Kaffeemaschine.

Machine à café avec un dispositif pour réduire la vapeur déchargée et méthode pour réduire la vapeur déchargée dans une machine à café

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2011 IT MI20111312**

(43) Date of publication of application:
**16.01.2013 Bulletin 2013/03**

(73) Proprietor: **De'Longhi Appliances S.r.l.**
**31100 Treviso (IT)**

(72) Inventor: **De' Longhi, Giuseppe**
**31100 Treviso (IT)**

(74) Representative: **Rapisardi, Mariacristina**
**Ufficio Brevetti Rapisardi S.r.l.**
**Via Serbelloni, 12**
**20122 Milano (IT)**

(56) References cited:
**EP-A1- 0 853 909    EP-A1- 1 415 580**
**GB-A- 944 653**

**Description**

The present invention relates to a coffee machine equipped with a device for reducing discharge steam and to a method for reducing the discharge steam produced in a coffee machine.

Known coffee machines predisposed for preparation of a cappuccino generally comprise a feed pump inserted in a pipe for feeding cold water to a boiler connected through valve means to a line for delivering coffee, to a line for delivering steam and/or hot water, and at least a pipe for discharging steam and/or hot water that are produced during a cooling cycle of the boiler.

In fact, the production of a cappuccino requires an initial cycle of production of hot milk foam, an intermediate cycle of cooling of the boiler, and a final cycle of production of the coffee to be added to the hot milk foam.

Since the production of hot milk foam takes place with the boiler operating at a working temperature of over 150 °C, the boiler has to be cooled in the shortest possible time to bring it to a temperature of around 100 °C which is considered ideal for the production of coffee.

The cooling cycle is performed with a flow of cold water which evaporates on passage through the boiler and is discharged through the discharge pipe. Normally, the coffee machine is equipped with a means for reducing the discharge steam which can be in the form of a heat sink, typically a body with a high coefficient of thermal conductivity which envelops a tract of the discharge pipe. This device for reducing the steam is generally hampered by having poor efficiency, and determines only a modest reduction of steam.

An improved variant of the device for reducing the steam can, as is apparent from EP1415580, provide a heat exchanger made by enveloping in a heat sink member, for example a mass of a metal material, a tract of the discharge pipe of the steam and a tract of the cold water feed pipe.

This steam reducing device might also be liable to an inappropriate heat exchange, which might lead to a significant lengthening in the time required to prepare a cappuccino.

In addition the provision of a die-cast body for heat dissipation can lead to an increase in the production costs of the device for reducing the steam.

A technical objective of the present invention is, therefore, to realise a coffee machine provided with a device for reducing the discharge steam and a method for reducing the discharge steam in a coffee machine, thus making it possible to eliminate the technical drawbacks of the prior art.

Within this technical objective an aim of the invention is to provide a coffee machine provided with a device for reducing the discharge steam and a method for reducing the discharge steam in a coffee machine that enable a reduction of the discharge steam without a substantial increase in preparation time of a cappuccino. A further aim of the invention is to provide a coffee machine equipped with device for reducing the discharge steam which can safeguard proper functioning and the structural integrity of the electrical and electronic components present inside the coffee machine which might otherwise suffer from the presence of an excessive amount of steam produced during the intermediate cooling cycle of the boiler.

A further aim of the invention is to provide a device for reducing the discharge suitable for eliminating any groundless source of concern for the user when using the coffee machine.

A further aim of the invention is to provide a coffee machine provided with a device for reducing the discharge steam that is simple and compact.

The technical objective, as well as these and other aims according to the present invention, are attained by realising a coffee machine comprising at least a water feed pipe to at least one boiler connected by valve means to a line for delivering coffee, to a line for delivering steam and/or hot water, and to at least one pipe for discharging steam and/or hot water which are produced during a cycle of cooling the boiler with a flow of cold water coming from said water feed pipe, and a device for reducing the steam flowing along said discharge pipe, **characterised in that** said device for reducing the steam comprises at least one heat exchanger formed of at least one tract of the discharge pipe configured and arranged in such a way as to contain inside it at least one tract of said water feed pipe.

The present invention also discloses a method for reducing the discharge steam in a coffee machine comprising at least one pipe for feeding water to at least one boiler connected by valve means to a line for delivering coffee, to a line for delivering steam and/or hot water, and to at least one pipe for discharging steam and/or hot water which are produced during a cycle of cooling the boiler with a flow of cold water fed through said water feed pipe, characterised by positioning at least one tract of said water feed pipe to the inside of at least one tract of the discharge pipe in such a way as to create a high-efficiency heat exchange between the flow of steam flowing along said tract of discharge pipe and the flow of cold water flowing along said tract of water feed pipe.

Further characteristics of the present invention are further defined in the subsequent claims.

Further characteristics and advantages of the invention will more fully emerge from the description of a preferred but not exclusive embodiment of the coffee machine provided with a device for reducing steam according to the invention, illustrated purely by way of non-limiting example in the accompanying drawings, wherein:

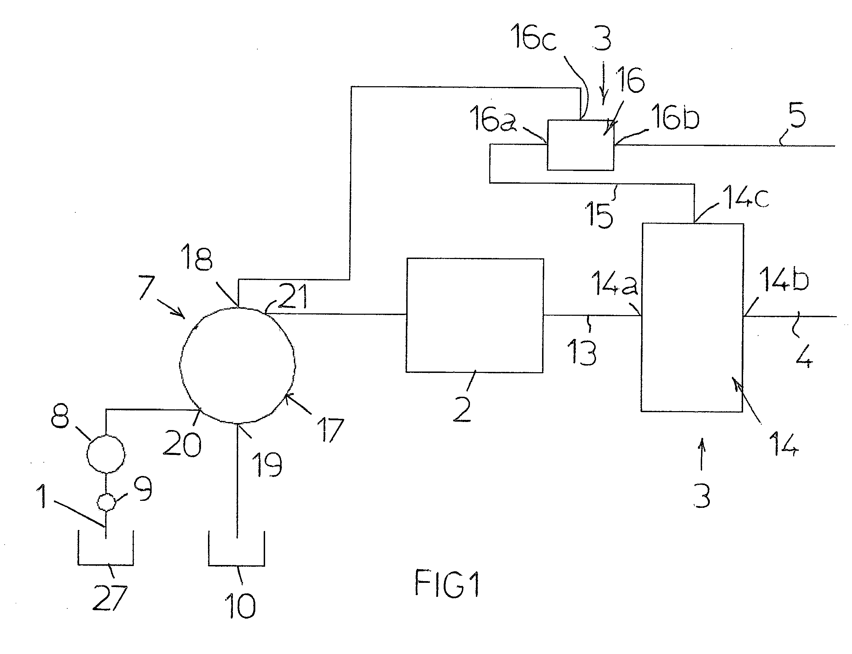

figure 1 illustrates the hydraulic diagram of the coffee machine;

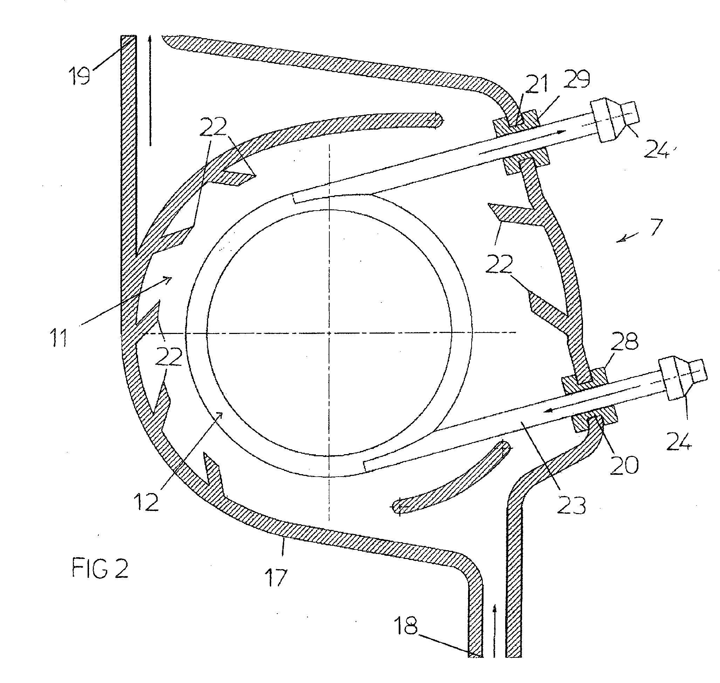

figure 2 shows a section of the heat exchanger of the device for reducing the steam of the invention.

With reference to the figures, the hydraulic diagram is illustrated of a coffee machine equipped with a device for reducing the steam.

The coffee machine comprises at least one pipe 1 for feeding water, via at least one pump 8 provided with a flow meter 9, to at least one boiler 2 connected via valve means 3 to a line 4 for delivering coffee, to a line for delivering steam and/or hot water 5 and to at least one pipe 6 for discharging steam and/or hot water.

The coffee machine also comprises a device 7 for reducing the steam produced during the intermediate cooling cycle of the boiler 2 which is necessary for the production of a cappuccino.

As mentioned herein above, the production of a cappuccino requires an initial cycle in which the boiler 2 is activated at about 150 °C for the production of hot milk foam, followed by an intermediate cycle of cooling the boiler 2, which is to be brought to about 100 °C such as to perform the next coffee production cycle. The cooling cycle is performed with a flow of cold water which evaporates completely or in part during passage thereof through the boiler 2 and is discharged through the discharge pipe 6, to be collected in a suitable receptacle 10.

The cooling of the boiler 2 produces, in each case, a significant amount of steam that, if it spreads to outside the coffee machine, can be incorrectly perceived by the user as an indicator of a malfunction or a danger.

The precise purpose of the device for reducing the steam is to prevent the escape of steam from the body of the coffee machine to prevent such a false alarm.

One of the salient aspects of the invention consists in the fact that the device for reducing the steam 7 comprises at least a heat exchanger formed by at least a tract 11 of the discharge pipe 6 configured and arranged in such a way as to contain internally thereof at least a tract 12 of the water feed pipe 1.

With this configuration of the heat exchanger only the wall of the tract 12 of the water feed pipe 1 separates the flow of steam which passes through the tract 11 of the discharge pipe 6 from the flow of cold water that passes through the tract 12 of the water feed pipe 1.

In the preferred embodiment illustrated in the hydraulic diagram of the coffee machine, the line for delivering coffee 4, the line for delivering steam and/or hot water 5, and the discharge pipe 6 are connected through the valve means 3 to the outlet pipe 13 of the boiler 2.

The valve means preferably comprise a first three-way valve 14 with passageways 14a, 14b, 14c of the selective hydraulic connection of the outlet pipe 13 with the line for delivering coffee 4 or with a pipe 15 connecting to a second three-way valve 16, having three passageways 16a, 16b, 16c of selective hydraulic connection of the connecting pipe 15 with the line for delivering steam and/or hot water 5 or with the discharge pipe 6.

The valve 14 is preferably a mechanical valve while the valve 16 is a solenoid valve.

Preferably, the tract 11 of the discharge pipe 6 is conformed as a closed collector body 17 having at least one intake path 18 and at least one output path 19 for the discharge of steam and/or hot water, at least one intake path 20 and at least one output path 21 for the tract 12 of the water feed pipe 1.

The tract 12 of the water feed pipe 1 is developed in the collector body 17 for a length that is substantially greater than the minimum distance between the intake path 20 and the output path thereof 21 from the collector body 17.

In particular, the tract 12 of the water feed pipe 1 extends in a spiral or serpentine inside the collector body 17.

The collector body 17 in turn internally exhibits preferably fins 22 for conveying the flow of hot water and/or steam entering the collector body 17 towards the tract 12 of the water feed pipe 1.

In particular the fins 22 define internally of the collector body 17 an obligatory path for the stream flow which is forced to flow onto the tract 12 of the supply pipe 1 over an entire lengthwise development thereof in the collector body 17.

The tract 12 of water feed pipe 1 preferably comprises a small tube 23 made of a material having a high coefficient of thermal conductivity.

The small tube 23 preferably exhibits deformations 24 at ends thereof for connecting to small tubes (not illustrated) to complete the water feed pipe 1, and is fixed by means of seal rings 28 and respectively 29 to the intake path 20 and respectively to the output path 21.

The small tube 23 is preferably made of a metal material, preferably stainless steel, while the small tubes are made of plastic, preferably silicone.

The collector body 17 instead is preferably made of heat-resistant plastic material. The functioning of the coffee machine for the production of the cappuccino is briefly as follows.

To carry out the initial hot milk foam production cycle the passageway 14a of the first valve 14 is in communication with the passageway 14c and the passageway 14b is consequently closed, while the valve 16 has the passageway 16a in communication with the passageway 16b, with passageway 16c subsequently closed. In this configuration of the valve means 3, the boiler 2 can feed line 5 but not line 4 or the discharge pipe 6.

The pump 8 begins by sourcing cold water from a tank 27 of cold water; the cold water is converted to steam in the boiler 2 suitably heated to about 150 °C, and the steam thus obtained is conveyed towards the line 5 from which, through a special dispenser (not shown) it is dispensed into the cup such as to heat the milk present therein.

To carry out the intermediate cooling cycle of the boiler 2, the first valve 14 has the passageway 14a in communication with the passageway 14c and the passageway 14b consequently closed, while the valve 16 has the passageway 16a in communication with the passageway 16c and the passageway 16b consequently closed. In this configuration of the valve means 3, the boiler 2 can supply the discharge pipe 6, but not the line 4 or line 5.

The pump 8 begins by sourcing cold water from a tank 27 of cold water, the cold water at least partly converted to steam in the boiler 2 which is brought to a temperature of about 100 °C, and the steam or steam/water mixture thus obtained is conveyed towards the discharge line 6.

The steam, when it enters the collector body 17, begins to condense as a result of the heat exchange realised with the cold water which in the meantime passes through the tract 12 of feed pipe 1, and the condensate is collected in the receptacle 10.

In addition to effectively reducing the steam present in the collector body 17, the heat exchanger determines a preheating of the tract 12 of feed pipe 1 such as to achieve energy savings for the supplying of the boiler 2 during the following coffee production cycle.

For the carrying out of the final coffee production cycle the first valve 14 has the passageway 14a in communication with the passageway 14b and passageway 14c is consequently closed. In this configuration of the valve means 3, the boiler 2 can feed the line 4 but not line 5 nor the discharge pipe 6.

The pump 8 starts by sourcing cold water from the tank 27 of cold water, the cold water is preheated along the tract 12 of the feed pipe 1 and heated in the boiler 2 to about 100 °C, and the hot water thus obtained is used for infusion into the infusion group inserted in the line 4, from which, via a special dispenser (not illustrated) the coffee is dispensed into the cup where the hot milk foam has previously been conveyed.

Below is an example that quantitatively describes the heat exchange that is necessary in the heat exchanger.

The data are:

Cold water temperature at the inlet collector body: $T_{ia}$ = 23 °C
Steam temperature at inlet into the collector body: $T_{iv}$ = 130 °C
Steam temperature at outlet from the collector body: $T_{uv}$ = 100 °C
Steam flow to be cooled, $G_v$ = 3 kg/h (maximum)
Coolant cold water flow rate: $G_a$ = 30 kg/h
Heat exchange surface: S = 9400 mm$^2$
Collector body volume: 80 cm$^3$
Volume of cold water small tube contained in the pipe collector: 8.4 cm$^3$

The heat exchanged in this type of heat exchanger can be expressed by the equation:

$$Q = h * S * DT_{lm}$$

where h is a coefficient of heat exchange (normally between 2500 and 4000 W/m$^2$K); S is the heat exchange surface and $DT_{lm}$ is the logarithmic mean temperature difference, which can be evaluated with the following expression:

$$DT_{lm} = [(T_{iv} - T_{ua}) - (T_{uv} - T_{ia})] / \ln[(T_{iv} - T_{ua})/(T_{uv} - T_{ia})]$$

The theoretical heat necessary for the cooling and condensation of the steam is:

$$Q = Gv * Cp * (Tiv - Tuv) + Gv * \lambda$$

Where Cp is the specific heat of water (4187 J/kg * K) and $\lambda$ is the latent heat of condensation (2272 kJ/kg).

With the known data the result is about Q = 2 kW.

This heat must be removed from the cooling water:

$$Q = h*S* DT_{lm} \quad => \quad 2000 = 3500 * 0{,}0094 * DT_{lm} \quad => \quad DT_{lm} = 60 \text{ K}$$

From which $T_{ua}$ = 84°C.

In reality this is the theoretical maximum exchangeable power by the condenser; normally the steam flow rate is much lower (the heat exchanger serves to condense the discharge of steam from the boiler, which rapidly reduces the flow thereof). From experimental tests it results that on average the temperature of service water in outlet from the heat exchanger is about 56 °C; thus the exchanged power is:

$$Q = Ga * Cp * (T_{ua} - T_{ia}) = 1100 \text{ W}.$$

The coffee machine equipped with the device for reducing the discharge steam and the method of reducing the discharge steam in a coffee machine thus conceived are susceptible to numerous modifications and variants, all falling within the inventive concept; furthermore all the details can be replaced by technically equivalent elements.
In practice the materials used, as well as the dimensions, may be any according to requirements and the state of the art.

**Claims**

1. Coffee machine comprising at least one pipe (1) for feeding water to at least one boiler (2) connected by valve means (3) to a line for delivering coffee (4), to a line for delivering steam and/or hot water (5), and to at least one pipe (6) for discharging steam and/or hot water which are produced during a cycle of cooling the boiler (2) with a flow of cold water coming from said water feed pipe (1), and a device (7) for reducing the steam flowing along said discharge pipe (6), **characterised in that** said steam reducing device (7) comprises at least one heat exchanger formed of at least one tract (11) of the discharge pipe (6) configured and arranged in such a way as to contain inside it at least one tract (12) of said water feed pipe (1).

2. Coffee machine according to the preceding claim, **characterised in that** said coffee delivery line (4), said line for delivering steam and/or hot water (5) and said discharge pipe (6) are connected by said valve means (3) to the outlet pipe (13) of said boiler (2).

3. Coffee machine according to the preceding claim, **characterised in that** said valve means (3) comprise a first three-way valve (14) for the selective hydraulic connection of said outlet pipe (13) with said coffee delivery line (4) or with a pipe (15) for connection to a second three-way valve (16) for the selective hydraulic connection of said connecting pipe (15) with said line for delivering steam and/or hot water (5) or with said discharge pipe (6).

4. Coffee machine according to any preceding claim, **characterised in that** said tract (11) of the discharge pipe (6) has the conformation of a closed collector body (17) featuring at least one intake path (18) and at least one output path (19) for the discharge of steam and/or hot water, at least one intake path (20) and at least one output path (21) for said tract (12) of the water feed pipe (1).

5. Coffee machine according to claim 4, **characterised in that** said tract (12) of said pipe (1) for feeding water to said boiler (2) extends into said collector body (17) for a length perceptibly greater than the minimum distance between its intake path (20) and its output path (21) from the collector body (17).

6. Coffee machine according to the preceding claim, **characterised in that** said tract (12) of said pipe (1) for feeding water to said boiler (2) extends in a spiral or a serpentine into said collector body (17).

7. Coffee machine according to any claim from 4 to 6, **characterised in that** said collector body (17) features internally fins (22) for ducting the flow of hot water and/or steam entering the collector body (17) towards said tract (12) of the water feed pipe (1).

8. Coffee machine according to any preceding claim, **characterised in that** said tract (12) of water feed pipe (1) comprises a small tube (23) in material having a high coefficient of thermal conductivity.

9. Coffee machine according to the preceding claim, **characterised in that** said small tube (23) features deformations (24) at its ends for connecting to small tubes completing said water feed pipe (1).

10. Coffee machine according to the preceding claim, **characterised in that** said small tube (23) is made of metallic material and said small completion tubes are made of plastic.

11. Coffee machine according to the preceding claim, **characterised in that** said small tube (23) is made of stainless steel and said small completion tubes are made of silicone.

12. Coffee machine according to any claim from 4 to 11, **characterised in that** said collector body (17) is made of heat-resistant plastic material.

13. Method of reducing the discharge of steam in a coffee machine comprising at least one pipe (1) for feeding water to at least one boiler (2) connected by valve means (3) to a line for delivering coffee (4), to a line for delivering steam and/or hot water (5), and to at least one pipe (6) for discharging steam and/or hot water which are produced during a cycle of cooling the boiler (2) with a flow of cold water fed through said water feed pipe (1), **characterised by** positioning at least one tract (12) of said water feed pipe (1) to the inside of at least one tract (11) of the discharge pipe (6) in such a way as to create a high-efficiency heat exchange between the flow of steam flowing along said tract (11) of discharge pipe (6) and the flow of cold water flowing along said tract (12) of water feed pipe.

**Patentansprüche**

1. Kaffeemaschine, umfassend mindestens ein Rohr (1), um mindestens einen Boiler (2) mit Wasser zu speisen, angeschlossen mittels Ventilmitteln (3) an eine Leitung zur Zuführung von Kaffee (4), an eine Leitung zur Zuführung von Dampf und/oder heißem Wasser (5) und an mindestens ein Rohr (6) zum Ablassen von Dampf und/oder heißem Wasser, der/das während eines Zyklus zum Abkühlen des Boilers (2) mit einem Kaltwasserstrom aus dem Wasserspeiserohr (1) erzeugt wird, und eine Vorrichtung (7) zur Verringerung des Dampfs, der entlang des Ablassrohrs (6) strömt, **dadurch gekennzeichnet, dass** diese Vorrichtung zur Dampfverringerung (7) mindestens einen Wärmetauscher umfasst, der aus mindestens einem Teilstück (11) des Ablassrohrs (6) gebildet ist, so ausgelegt und angeordnet, dass dieses in mindestens einem Teilstück (12) des Wasserspeiserohrs (1) enthalten ist.

2. Kaffeemaschine nach dem vorhergehenden Anspruch, **dadurch gekennzeichnet, dass** die Kaffeezuführungsleitung (4), die Leitung zur Zuführung von Dampf und/oder heißem Wasser (5) und das Ablassrohr (6) mittels der Ventilmittel (3) an das Auslassrohr (13) des Boilers (2) angeschlossen sind.

3. Kaffeemaschine nach dem vorhergehenden Anspruch, **dadurch gekennzeichnet, dass** die Ventilmittel (3) ein erstes Dreiwegeventil (14) für den selektiven hydraulischen Anschluss des Auslassrohrs (13) an die Kaffeezuführungsleitung (4) oder ein Rohr (15) für die Verbindung mit einem zweiten Dreiwegeventil (16) für den selektiven hydraulischen Anschluss des Verbindungsrohrs (15) an die Leitung zur Zuführung von Dampf und/oder heißem Wasser (5) oder das Ablassrohr (6) umfassen.

4. Kaffeemaschine nach einem der vorhergehenden Ansprüche, **dadurch gekennzeichnet, dass** das Teilstück (11) des Ablassrohrs (6) die Beschaffenheit eines geschlossenen Verteilerkörpers (17) besitzt, aufweisend mindestens einen Einlassweg (18) und mindestens einen Auslassweg (19) zum Ablassen von Dampf und/oder heißem Wasser, mindestens einen Einlassweg (20) und mindestens einen Auslassweg (21) für das Teilstück (12) des Wasserspeiserohrs (1).

5. Kaffeemaschine nach Anspruch 4, **dadurch gekennzeichnet, dass** sich das Teilstück (12) des Rohrs (1) zum Speisen des Boilers (2) mit Wasser in den Verteilerkörper (17) erstreckt, und zwar für eine Länge, die wahrnehmbar größer ist als der Mindestabstand zwischen dem Einlassweg (20) und dem Auslassweg (21) aus dem Verteilerkörper (17).

6. Kaffeemaschine nach dem vorhergehenden Anspruch, **dadurch gekennzeichnet, dass** sich das erste Teilstück (12) des Rohrs (1) zum Speisen des Boilers (2) mit Wasser in einer Spirale oder Schlange im Verteilerkörper (17) erstreckt.

**7.** Kaffeemaschine nach einem der Ansprüche 4 bis 6, **dadurch gekennzeichnet, dass** der Verteilerkörper (17) intern Rippen (22) aufweist, um den Heißwasser- und/oder Dampfstrom, der in den Verteilerkörper (17) strömt, zum Teilstück (12) des Wasserspeiserohrs (1) zu führen.

**8.** Kaffeemaschine nach einem der vorhergehenden Ansprüche, **dadurch gekennzeichnet, dass** das Teilstück (12) des Wasserspeiserohrs (1) ein kleines Rohr (23) aus einem Material, aufweisend einen hohen Wärmeleitfähigkeitskoeffizienten, umfasst.

**9.** Kaffeemaschine nach dem vorhergehenden Anspruch, **dadurch gekennzeichnet, dass** das kleine Rohr (23) Verformungen (24) an seinen Enden aufweist, um an kleine Rohre angeschlossen zu werden, die das Wasserspeiserohr (1) vervollständigen.

**10.** Kaffeemaschine nach dem vorhergehenden Anspruch, **dadurch gekennzeichnet, dass** das kleine Rohr (23) aus Metallmaterial besteht und die kleinen Vervollständigungsrohre aus Kunststoff bestehen.

**11.** Kaffeemaschine nach dem vorhergehenden Anspruch, **dadurch gekennzeichnet, dass** das kleine Rohr (23) aus Edelstahl besteht und die kleinen Vervollständigungsrohre aus Silikon bestehen.

**12.** Kaffeemaschine nach einem der Ansprüche 4 bis 11, **dadurch gekennzeichnet, dass** der Verteilerkörper (17) aus hitzebeständigem Kunststoffmaterial besteht.

**13.** Verfahren zur Verringerung von Restdampf in einer Kaffeemaschine, umfassend mindestens ein Rohr (1), um mindestens einen Boiler (2) mit Wasser zu speisen, angeschlossen mittels Ventilmitteln (3) an eine Leitung zur Zuführung von Kaffee (4), an eine Leitung zur Zuführung von Dampf und/oder heißem Wasser (5) und an mindestens ein Rohr (6) zum Ablassen von Dampf und/oder heißem Wasser, der/das während eines Zyklus zum Abkühlen des Boilers (2) mit einem Kaltwasserstrom, der durch das Wasserspeiserohr (1) eingespeist wird, erzeugt wird, **gekennzeichnet durch** das Positionieren von mindestens einem Teilstück (12) des Wasserspeiserohrs (1) in das mindestens eine Teilstück (11) des Ablassrohrs (6), sodass ein hocheffizienter Wärmetausch zwischen dem Dampfstrom, der entlang des Teilstücks (11) des Ablassrohrs (6) strömt, und dem Kaltwasserstrom, der entlang des Teilstücks (12) des Wasserspeiserohrs strömt, erzeugt wird.

**Revendications**

**1.** Machine à café comprenant au moins un conduit (1) servant à alimenter en eau au moins une chaudière (2) reliée par des moyens de valve (3) à une conduite de distribution de café (4), à une conduite de distribution de vapeur et/ou d'eau chaude (5) et à au moins un conduit (6) servant à décharger la vapeur et/ou l'eau chaude étant produites lors d'un cycle de refroidissement de la chaudière (2) avec une circulation d'eau froide provenant dudit conduit d'alimentation en eau (1), et un dispositif (7) permettant de réduire la vapeur s'écoulant le long dudit conduit de décharge (6), **caractérisée en ce que** le dispositif de réduction de vapeur (7) comprend au moins un échangeur de chaleur formé d'au moins une partie (11) du conduit de décharge (6) configuré et disposé de manière à contenir en son sein au moins une partie (12) dudit conduit d'alimentation en eau (1).

**2.** Machine à café selon la revendication précédente, **caractérisée en ce que** ladite conduite de distribution de café (4), ladite conduite de distribution de vapeur et/ou d'eau chaude (5) et ledit conduit de décharge (6) sont reliés par lesdits moyens de valve (3) au conduit d'évacuation (13) de ladite chaudière (2).

**3.** Machine à café selon la revendication précédente, **caractérisée en ce que** lesdits moyens de valve (3) comprennent un premier robinet à trois voies (14) pour le raccordement hydraulique sélectif dudit conduit d'évacuation (13) à ladite conduite de distribution de café (4) ou à un conduit (15) permettant le raccordement à un second robinet à trois voies (16) pour le raccordement hydraulique sélectif dudit conduit de raccordement (15) à ladite conduite de distribution de vapeur et/ou d'eau chaude (5) ou au dit conduit de décharge (6).

**4.** Machine à café selon l'une quelconque des revendications précédentes, **caractérisée en ce que** ladite partie (11) du conduit de décharge (6) possède la forme d'un corps collecteur fermé (17) comportant au moins un canal d'admission (18) et au moins un canal de sortie (19) servant à décharger la vapeur et/ou l'eau chaude, et au moins un canal d'admission (20) et au moins un canal de sortie (21) pour ladite partie (12) du conduit d'alimentation en eau (1).

**5.** Machine à café selon la revendication 4, **caractérisée en ce que** ladite partie (12) dudit conduit (1) d'alimentation en eau de ladite chaudière (2) se développe dans ledit corps collecteur (17) sur une longueur sensiblement supérieure à la distance minimum entre son canal d'admission (20) et son canal de sortie (21) à partir du corps collecteur (17).

**6.** Machine à café selon la revendication précédente, **caractérisée en ce que** ladite partie (12) dudit conduit (1) d'alimentation en eau de ladite chaudière (2) se développe en spirale ou en serpentin dans ledit corps collecteur (17).

**7.** Machine à café selon l'une quelconque des revendications de 4 à 6, **caractérisée en ce que** ledit corps collecteur (17) comporte en son sein des ailettes (22) servant à aspirer l'écoulement d'eau chaude et/ou de vapeur entrant dans le corps collecteur (17) en direction de ladite partie (12) du conduit d'alimentation en eau (1).

**8.** Machine à café selon l'une quelconque des revendications précédentes, **caractérisée en ce que** ladite partie (12) du conduit d'alimentation en eau (1) comprend un petit tube (23) dans une matière ayant un coefficient élevé de conductibilité thermique.

**9.** Machine à café selon la revendication précédente, **caractérisée en ce que** ledit petit tube (23) comporte des déformations (24) à ses extrémités pour pouvoir le raccorder à de petits tubes complétant ledit conduit d'alimentation en eau (1).

**10.** Machine à café selon la revendication précédente, **caractérisée en ce que** ledit petit tube (23) est en métal et lesdits petits tubes terminaux en plastique.

**11.** Machine à café selon la revendication précédente, **caractérisée en ce que** ledit petit tube (23) est en acier inoxydable et lesdits petits tubes terminaux en silicone.

**12.** Machine à café selon l'une quelconque des revendications de 4 à 11, **caractérisée en ce que** ledit corps collecteur (17) est dans une matière plastique résistant à la chaleur.

**13.** Procédé de réduction de décharge de vapeur dans une machine à café comprenant au moins un conduit (1) servant à alimenter en eau au moins une chaudière (2) reliée par des moyens de valve (3) à une conduite de distribution de café (4), à une conduite de distribution de vapeur et/ou d'eau chaude (5) et à au moins un conduit (6) servant à décharger la vapeur et/ou l'eau chaude étant produites lors d'un cycle de refroidissement de la chaudière (2) avec une circulation d'eau froide alimentée à travers ledit conduit d'alimentation en eau (1), **caractérisé par** le positionnement d'au moins une partie (12) dudit conduit d'alimentation en eau (1) à l'intérieur d'au moins une partie (11) du conduit de décharge (6) de manière à créer un échange de chaleur à haute performance entre le flux de vapeur s'écoulant le long de ladite partie (11) du conduit de décharge (6) et le débit d'eau froide s'écoulant le long de ladite partie (12) du conduit d'alimentation en eau.

FIG1

FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1415580 A